# EUROPEAN PATENT APPLICATION

(11) **EP 4 793 172 A1**
(43) Date of publication of application: **19.08.2026**
(21) Application number: 25157644.3
(22) Date of filing: 13.02.2025
(51) Int. Cl.: B64C 13/42

(54) **CONTROL SYSTEM**

(71) Applicant: Goodrich Actuation Systems Limited, Wolverhampton, West Midlands WV10 7EH (GB)
(72) Inventor: AVALA, Lakshmi Shirindra, Wolverhampton (GB); DAVIES, Christopher Stuart, Charfield (GB); BIRCHAM, Philip John, Pershore (GB)
(74) Representative: Casalonga

(57) **Abstract**

A control system for an aircraft comprising: a first left wing control element; a second left wing control element; a left wing hydraulic power pack configured to supply hydraulic fluid to the first and second left wing control elements to actuate the first and second left wing control elements; a first right wing control element; a second right wing control element; and a right wing hydraulic power pack configured to supply hydraulic fluid to the first and second right wing control elements to actuate the first and second right wing control elements.

## Description

### FIELD OF THE INVENTION

This application relates to a control system for an aircraft and an aircraft.

### BACKGROUND

It is desirable to reduce the weight and energy consumption and to increase the reliability of actuation systems in control system for aircraft. Existing systems have several limitations, with electromechanical actuators generally being heavier and of lower reliability, and with centralized hydraulic systems requiring complex and heavy fluid routing systems.

### SUMMARY

According to a first aspect there is provided a control system for an aircraft comprising: a first left wing control element; a second left wing control element; and a left wing hydraulic power pack configured to supply hydraulic fluid to the first and second left wing control elements to actuate the first and second left wing control elements.

By including a hydraulic power pack for the control elements in a wing, the weight and complexity of fluid routing systems may be reduced, the reliability of the system may be increased and the size of the power pack reduced, particularly where the control elements do not need to be actuated simultaneously.

The control system may further comprise a first right wing control element; a second right wing control element; and a right wing hydraulic power pack configured to supply hydraulic fluid to the first and second right wing control elements to actuate the first and second right wing control elements.

The control system may comprise a cross feed passage system, the cross feed passage system configured to permit flow of hydraulic fluid from the left wing hydraulic power pack to the second right wing control element.

The cross feed passage system may be further configured to permit flow of hydraulic fluid from the right wing hydraulic power pack to the second left wing control element.

The control system may comprise a cross feed valve, the cross feed valve configured to control flow of hydraulic fluid through the cross feed passage system.

The control system may comprise an additional left wing hydraulic power pack, the additional left wing hydraulic power pack configured to supply hydraulic fluid to the second left wing control element.

The left wing hydraulic power pack may be sized to meet a hydraulic fluid requirement of the first left wing control element.

The left wing hydraulic power pack and the additional left wing hydraulic power pack may be sized to together meet a hydraulic fluid requirement of the second left wing control element.

The left wing hydraulic power pack and the additional left wing hydraulic power pack may each be sized to meet a hydraulic fluid requirement of the second left wing control element.

The control system may comprise a first left wing selector valve, the first left wing selector valve configured to control flow of hydraulic fluid from the left wing hydraulic power pack to the first left wing control element.

The control system may comprise a second left wing selector valve, the second left wing selector valve configured to control flow of hydraulic fluid from the left wing hydraulic power pack to the second left wing control element.

The second left wing selector valve may be configured to control flow of hydraulic fluid from the left wing hydraulic power pack to the second right wing control element.

The control system may comprise a centralized system control element.

The left wing hydraulic power pack may be configured not to supply hydraulic fluid to the centralized system control element of the aircraft.

The right wing hydraulic power pack may be configured not to supply hydraulic fluid to the centralized system control element of the aircraft.

The control system may comprise a centralized hydraulic power pack configured to supply hydraulic fluid to the centralized system control element.

The first left wing control element may comprise at least one of a thrust reverser actuation system and a power door opening system.

The second left wing control element may comprise at least one of a folding wing tip, a fast-acting spoiler, and a slat and flap system.

The left wing hydraulic power pack may be sized to meet a hydraulic fluid requirement of the second left wing control element.

The second left wing control element may have a greater hydraulic fluid requirement than the first left wing control element. The second left wing control element may have a greater redundancy requirement than the first left wing control element.

According to a second aspect there is provided an aircraft comprising the control system described above.

The aircraft may comprise a left wing, wherein the first left wing control element, the second left wing control element and the left wing hydraulic power pack are located in the left wing. The left wing selector valve may be located in the left wing. The additional left wing hydraulic powerpack may be located in the left wing.

The aircraft may comprise a right wing, wherein the first right wing control element, the second right wing control element and the right wing hydraulic power pack are located in the right wing. The right wing selector valve may be located in the right wing. The additional right wing hydraulic powerpack may be located in the right wing.

### BRIEF DESCRIPTION OF THE DRAWINGS

Various examples will now be described with reference to the accompanying drawings in which:
Fig. 1 shows a schematic of an aircraft comprising a control system.
Fig. 2 shows a schematic of an aircraft comprising a control system.
Fig. 3 shows a schematic of an aircraft comprising a control system.
Fig. 4 shows a schematic of an aircraft comprising a control system.

### DETAILED DESCRIPTION

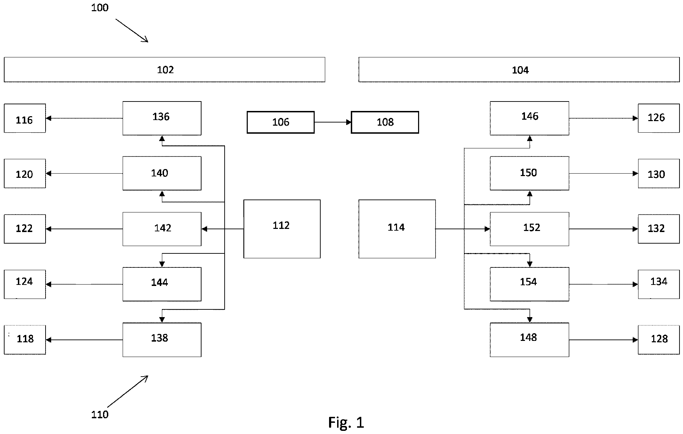

Fig. 1 shows an aircraft 100 comprising a left wing 102 and a right wing 104. The aircraft 100 further comprises a control system 110.

The control system 110 comprises a left wing hydraulic power pack 112. The left wing hydraulic power pack 112 is located in the region of the left wing 102. More specifically, the left wing hydraulic power pack 112 is located in the left wing 102.

The control system 110 comprises a right wing hydraulic power pack 114. The right wing hydraulic power pack 114 is located in the region of the right wing 104. More specifically, the right wing hydraulic power pack 114 is located in the left wing 104.

Each of the left wing and right wing hydraulic power packs 112 114 comprises a motor and a pump (not shown), and is configured to receive power (more specifically electric power) to power the motor, which in turn is configured to drive the pump to supply hydraulic fluid. Each hydraulic power pack further comprise features such as a hydraulic reservoir, along with associated sensors valves and piping.

The control system 110 comprises a first left wing control element 116. The control system 110 comprises a second left wing control element 118. The control system 110 comprises a third left wing control element 120. The control system 110 comprises a fourth left wing control element 122. The control system 110 comprises a fifth left wing control element 124. Each of the left wing control elements is located in the region of the left wing 102. More specifically, each of the left wing control elements is located in the left wing 102.

The control system 110 comprises a first right wing control element 126. The control system 110 comprises a second left wing control element 128. The control system 110 comprises a third left wing control element 130. The control system 110 comprises a fourth left wing control element 132. The control system 110 comprises a fifth left wing control element 134. Each of the right wing control elements is located in the region of the right wing 104. More specifically, each of the right wing control elements is located in the right wing 102.

The control elements may be used intermittently during use of the aircraft (e.g. during flight, take-off, climbing, cruise, decent, landing, taxi and/or maintenance of the aircraft). The control elements may be primary control elements, secondary control elements or auxiliary control elements. It may be necessary to use only one of the left wing control elements at a time. It may be necessary to use only one of the right wing control elements at a time.

In the present example, the first left wing control element 116 is a thrust reverser actuation system 116. The second left wing control element 118 is a slat and flap system 118. The third left wing control element 120 is a power door operating system 120. The fourth left wing control element 122 is a folding wing tip 122. The fifth left wing control element 124 is a fast acting spoiler system 124.

The right wing control elements are corresponding control elements for the right wing. More specifically the first right wing control element 126 is a thrust reverser actuation system 126. The second left wing control element 128 a slat and flap system 128. The third left wing control element 130 is a power door operating system 130. The fourth left wing control element 132 is a folding wing tip 132. The fifth left wing control element 134 is a fast acting spoiler system 124. In other examples the control elements may comprise a landing gear actuation system (nose and/or main for extension and/or retraction), a wheel braking system, a nose landing gear steering system, and/or another control system which is not specific to a wing but is also not used continuously in use.

At least one of the left wing control elements is a first type of control element. At least one of the left wing control elements is a second type of control element. At least one of the right wing control elements is a first type of control element. At least one of the right wing control elements is a second type of control element. The second type of control element has a greater power requirement than the first type of control element. The second type of control element may have a greater redundancy requirement than the first type of control element (e.g. due to the second type of control element being a single point failure of the aircraft).

The first left wing control element 116 is of the first type of control elements. The third left wing control element 120 is of the first type of control elements.

The second left wing control element 118 is of the second type of control elements. The fourth left wing control element 122 is of the second type of control elements. The fifth left wing control element 124 is of the second type of control elements.

The first right wing control element 126 is of the first type of control elements. The third right wing control element 130 is of the first type of control elements.

The second right wing control element 128 is of the second type of control elements. The fourth right wing control element 132 is of the second type of control elements. The fifth right wing control element 134 is of the second type of control elements.

The control system 110 comprises a first left wing selector valve 136. The first left wing selector valve 136 is positioned in a fluid line leading from the left wing hydraulic power pack 112 to the first left control element 116. The first left wing selector valve 136 controls the flow of hydraulic fluid from the left wing hydraulic power pack 112 to the first left control element 116. The first left wing selector valve 136 may selectively prevent, permit and/or control a flow rate of the flow of hydraulic fluid from the left wing hydraulic power pack to the first left control element 116.

The control system 110 comprises a second left wing selector valve 138. The second left wing selector valve 138 is positioned in a fluid line leading from the left wing hydraulic power pack 112 to the second left control element 118. The second left wing selector valve 138 controls the flow of hydraulic fluid from the left wing hydraulic power pack 112 to the second left control element 118. The second left wing selector valve 138 may selectively prevent, permit and/or control a flow rate of the flow of hydraulic fluid from the left wing hydraulic power pack 112 to the second left control element 118.

The control system 110 comprises a third left wing selector valve 140. The control system 110 comprises a fourth left wing selector valve 142. The control system 110 comprises a fifth left wing selector valve 144. It will be understood that each of the third, fourth and fifth selector valves 140 142 144 has the same position, features and functions as the first and second selector valves 136 138, but in relation to its respective control element 120 122 124.

The control system 110 comprises a first right wing selector valve 146. The control system 110 comprises a second right wing selector valve 148. The control system 110 comprises a third right wing selector valve 150. The control system 110 comprises a fourth right wing selector valve 152. The control system 110 comprises a fifth right wing selector valve 154. It will be understood that each of the first to fifth right wing selector valves has the same position, features and functions as the corresponding left wing selector valve, but in relation to its respective right wing control element.

The control system 110 further comprises a centralized hydraulic power pack 106 and a centralized system control element 108. In contrast to the control elements, the centralized system control element 108 may be used substantially continuously throughout flight. The centralized system control element 108 may be, for example, an aileron system. The centralized hydraulic power pack 106 and/or the centralized system control element 108 are not in fluid communication with the left and right hydraulic power packs 112 114. The centralized hydraulic power pack 106 is located in a fuselage of the aircraft. The centralized hydraulic power pack 106 is configured to supply hydraulic fluid to the centralized system control element 108. It will be understood that in some examples the control system 110 may comprise a plurality of such centralized system control elements 108, and the centralized hydraulic power pack 106 may be configured to supply hydraulic fluid to the plurality of centralized system control elements 108, including supplying hydraulic fluid to a plurality of centralized system control elements 108 simultaneously.

The left wing hydraulic power pack 112 is configured to supply hydraulic fluid to the first left wing control element 116 to actuate the first left wing control element 116. The left wing hydraulic power pack 112 is configured to supply hydraulic fluid to the second left wing control element 118 to actuate the second left wing control element 118. The left wing hydraulic power pack 112 is configured to supply hydraulic fluid to the third left wing control element 120 to actuate the third left wing control element 120. The left wing hydraulic power pack 112 is configured to supply hydraulic fluid to the fourth left wing control element 122 to actuate the fourth left wing control element 122. The left wing hydraulic power pack 112 is configured to supply hydraulic fluid to the fifth left wing control element 124 to actuate the fifth left wing control element 124.

The right wing hydraulic power pack 114 is configured to supply hydraulic fluid to the first right wing control element 126 to actuate the first right wing control element 126. The right wing hydraulic power pack 114 is configured to supply hydraulic fluid to the second right wing control element 128 to actuate the second right wing control element 128. The right wing hydraulic power pack 114 is configured to supply hydraulic fluid to the third right wing control element 130 to actuate the third right wing control element 130. The right wing hydraulic power pack 122114 is configured to supply hydraulic fluid to the fourth right wing control element 132 to actuate the fourth right wing control element 132. The right wing hydraulic power pack 122114 is configured to supply hydraulic fluid to the fifth right wing control element 134 to actuate the fifth right wing control element 134.

The left wing hydraulic power pack 112 is sized to meet a hydraulic fluid requirement of the control elements of the second type. More specifically the left wing hydraulic power pack 112 is sized to meet a hydraulic fluid requirement of the second left wing control element 118. In other examples, the left wing hydraulic power pack 112 may be sized to meet a hydraulic fluid requirement of any one of the left wing control elements.

The right wing hydraulic power pack 114 is sized to meet a hydraulic fluid requirement of the control elements of the second type. More specifically the right wing hydraulic power pack 114 is sized to meet a hydraulic fluid requirement of the second right wing control element 128. In other examples, the right wing hydraulic power pack 114 may be sized to meet a hydraulic fluid requirement of any one of the right wing control elements.

"Sized to meet a hydraulic fluid requirement" may mean that the power pack is able to provide hydraulic fluid at a maximum in use required power and/or flow rate.

In use each of the selector valves 136 138 140 142 144 146 150 152 154 148 controls the supply of hydraulic fluid its respective control element. The selector valves are configured such that hydraulic fluid from each of the left and right wing hydraulic power packs 112 114 flows to only one control element at a time. Additionally, since the control elements require hydraulic fluid only intermittently, the hydraulic power packs are configured to be powered down (for example, not supplying hydraulic) during use (for example, during and/or before/after flight as described above).

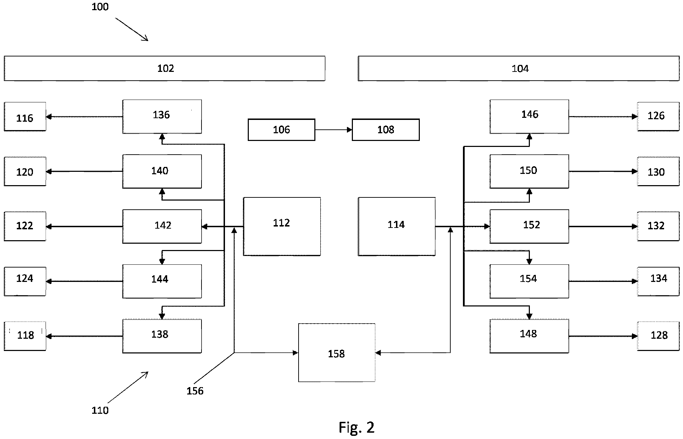

Fig. 2 shows a control system 110, which comprises all of the features of the control system 110 of Fig. 1. The control system 110 of Fig. 2 further comprises a cross feed passage system 156. The control system 110 of Fig. 2 further comprises a cross feed valve 158 configured to control flow of hydraulic fluid through the cross feed passage system 156.

In the control system 110 of Fig. 2 the cross feed passage system 156 comprises a fluid line leading from the left wing hydraulic power pack 112 to the right wing control elements 126 128 130 132 134, in the present example via the respective right wing selector valves 146 148 150 152 154. In the control system 110 of Fig. 2 the cross feed passage system 156 comprises a fluid line leading from the right wing hydraulic power pack 114 to left wing control elements 116 118 120 122 124, in the present example via the respective left wing selector valves 136 138 140 142 144.

The cross feed valve 158 controls (e.g. selectively preventing, permitting and/or controlling a flow rate) flow of hydraulic fluid between the hydraulic power packs 112 114 and the control elements.

At times of high hydraulic fluid demand in the control elements of one wing, the other hydraulic power pack of the other wing can help to meet the demand, which may permit smaller hydraulic power packs to be used.

Additionally, the cross feed passage system 156 may provide redundancy if there is a failure of one of the left and right wing power packs 112 114. This may require each of the left and right wing power packs 112 114 to be sized to meet a peak hydraulic fluid requirement of all of the control elements (which may e.g. be a hydraulic fluid requirement of one of the control elements of the second type, such as the second left wing control element).

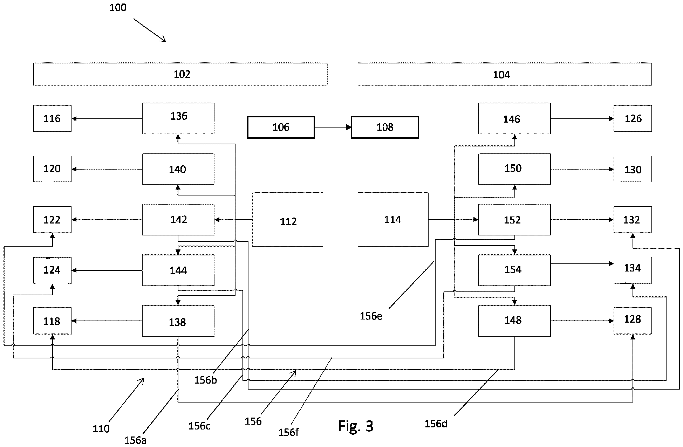

Fig. 3 shows a control system 110, which comprises all of the features of the control system 110 of Fig. 1. The control system 110 of Fig. 3 further comprises a cross feed passage system 156, which in a similar manner to that of Fig. 2 permits hydraulic fluid to flow from a hydraulic power pack of one wing to control elements of the other wing.

In contrast to the control system 110 of Fig. 2, the control system 110 of Fig. 3 does not comprise a cross feed valve 158. Instead, the cross feed passage system 156 of Fig. 3 comprises a plurality of fluid lines 156a-f leading from selector valves of one wing to control elements of the other wing. The cross feed passage system 156 permits the hydraulic power pack 112 114 of a wing 102 104 to supply hydraulic fluid to the control elements of the second type of the other wing 104 102. Again, this may permit smaller hydraulic power packs 112 114 to be used and/or may provide redundancy. The control elements of the second type may be safety critical control elements which require this redundancy, in contrast to those of the first type.

The cross feed passage system 156 comprises a first fluid line 156a, which provides hydraulic communication between the left hydraulic power pack 112 and the second right wing control element 128 (via the second left wing selector valve 138). The second left wing selector valve 138 controls (e.g. selectively prevents, permits and/or controls a flow rate) flow of hydraulic fluid from the left hydraulic power pack 112 to the second right wing control element 128.

The cross feed passage system 156 comprises a second fluid line 156b, which provides hydraulic communication between the left hydraulic power pack 112 and the fourth right wing control element 132 (via the fourth left wing selector valve 142). The fourth left wing selector valve 142 controls (e.g. selectively prevents, permits and/or controls a flow rate) flow of hydraulic fluid from the left hydraulic power pack 112 to the fourth right wing control element 132.

The cross feed passage system 156 comprises a third fluid line 156c, which provides hydraulic communication between the left hydraulic power pack 112 and the fifth right wing control element 134 (via the fifth left wing selector valve 144). The fifth left wing selector valve 144 controls (e.g. selectively prevents, permits and/or controls a flow rate) flow of hydraulic fluid from the left hydraulic power pack 112 to the fifth right wing control element 134.

The cross feed passage system 156 comprises a fourth fluid line 156d, which provides hydraulic communication between the right hydraulic power pack 114 and the second left wing control element 118 (via the second right wing selector valve 148). The second right wing selector valve 148 controls (e.g. selectively prevents, permits and/or controls a flow rate) flow of hydraulic fluid from the right hydraulic power pack 114 to the second left wing control element 118.

The cross feed passage system 156 comprises a fifth fluid line 156e, which provides hydraulic communication between the right hydraulic power pack 114 and the fourth left wing control element 122 (via the fourth right wing selector valve 152). The fourth right wing selector valve 152 controls (e.g. selectively prevents, permits and/or controls a flow rate) flow of hydraulic fluid from the right hydraulic power pack 114 to the fourth left wing control element 122.

The cross feed passage system 156 comprises a sixth fluid line 156f, which provides hydraulic communication between the right hydraulic power pack 114 and the fifth left wing control element 124 (via the fifth right wing selector valve 154). The fifth right wing selector valve 154 controls (e.g. selectively prevents, permits and/or controls a flow rate) flow of hydraulic fluid from the right hydraulic power pack 114 to the fifth left wing control element 124.

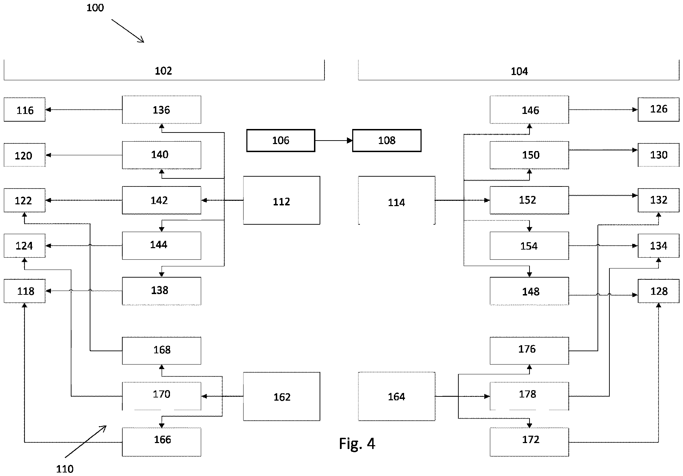

Fig. 4 shows a control system 110, which comprises all of the features of the control system 110 of Fig. 1. The control system 110 further comprises an additional left wing hydraulic power pack 162. The control system 110 of Fig. 4 further comprises an additional right wing hydraulic power pack 164.

The additional left wing hydraulic power pack 162 is configured to supply hydraulic fluid to the left wing control elements of the second type 118 122 124 (supplementing the hydraulic fluid supplied by the left wing hydraulic power pack 112). The additional right wing hydraulic power pack 164 is configured to supply hydraulic fluid to the right wing control elements of the second type 128 132 134 (supplementing the hydraulic fluid supplied by the right wing hydraulic power pack 114). This may permit the left and right hydraulic power packs 112 114 to be smaller (e.g. sized only to meet the hydraulic fluid requirements of the control elements of the first type, with the additional hydraulic power packs 162 164 being sized to meet the hydraulic fluid requirements of the control elements of the second type along with the hydraulic power packs 112 114) and/or may provide redundancy (e.g. with each of the left and right wing power packs 112 114 to be sized to meet a peak hydraulic fluid requirement of all of the control elements (which may e.g. be a hydraulic fluid requirement of one of the control elements of the second type, such as the second left wing control element)).

The control system 110 of Fig. 4 further comprises an additional second left wing selector valve 166. The control system 110 of Fig. 4 further comprises an additional fourth left wing selector valve 168. The control system 110 of Fig. 4 further comprises an additional fifth left wing selector valve 170.

The control system 110 of Fig. 4 further comprises an additional second right wing selector valve 172. The control system 110 of Fig. 4 further comprises an additional fourth right wing selector valve 176. The control system 110 of Fig. 4 further comprises an additional fifth right wing selector valve 178.

The additional left wing hydraulic power pack 162 is configured to supply hydraulic fluid to the second left wing control element 118 (via the additional second left wing selector valve 166). The additional second left wing selector valve 166 controls (e.g. selectively permits, prevents and/or controls a flow rate) hydraulic fluid flow from the additional left wing hydraulic power pack 162 to the second left wing control element 118.

The additional left wing hydraulic power pack 162 is configured to supply hydraulic fluid to the fourth left wing control element 122 (via the additional fourth left wing selector valve 168). The additional fourth left wing selector valve 168 controls (e.g. selectively permits, prevents and/or controls a flow rate) hydraulic fluid flow from the additional left wing hydraulic power pack 162 to the fourth left wing control element 122.

The additional left wing hydraulic power pack 162 is configured to supply hydraulic fluid to the fifth left wing control element 124 (via the additional fifth left wing selector valve 170). The additional fifth left wing selector valve 170 controls (e.g. selectively permits, prevents and/or controls a flow rate) hydraulic fluid flow from the additional left wing hydraulic power pack 162 to the fifth left wing control element 124.

The additional right wing hydraulic power pack 164 is configured to supply hydraulic fluid to the second right wing control element 128 (via the additional second left wing selector valve 172). The additional second right wing selector valve 172 controls (e.g. selectively permits, prevents and/or controls a flow rate) hydraulic fluid flow from the additional right wing hydraulic power pack 164 to the second right wing control element 128.

The additional right wing hydraulic power pack 164 is configured to supply hydraulic fluid to the fourth right wing control element 132 (via the additional fourth right wing selector valve 176). The additional fourth right wing selector valve 176 controls (e.g. selectively permits, prevents and/or controls a flow rate) hydraulic fluid flow from the additional right wing hydraulic power pack 164 to the fourth right wing control element 132.

The additional right wing hydraulic power pack 164 is configured to supply hydraulic fluid to the fifth right wing control element 134 (via the additional fifth right wing selector valve 178). The additional fifth right wing selector valve 178 controls (e.g. selectively permits, prevents and/or controls a flow rate) hydraulic fluid flow from the additional right wing hydraulic power pack 164 to the fifth right wing control element 134.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A control system for an aircraft comprising:
a first left wing control element;
a second left wing control element;
a left wing hydraulic power pack configured to supply hydraulic fluid to the first and second left wing control elements to actuate the first and second left wing control elements;
a first right wing control element;
a second right wing control element; and
a right wing hydraulic power pack configured to supply hydraulic fluid to the first and second right wing control elements to actuate the first and second right wing control elements.

2. A control system according to claim 1 and comprising a cross feed passage system, the cross feed passage system configured to permit flow of hydraulic fluid from the left wing hydraulic power pack to the second right wing control element.

3. A control system according to claim 2, wherein the cross feed passage system is further configured to permit flow of hydraulic fluid from the right wing hydraulic power pack to the second left wing control element.

4. A control system according to claim 2 or 3 and comprising a cross feed valve, the cross feed valve configured to control flow of hydraulic fluid through the cross feed passage system.

5. A control system according to any preceding claim and comprising an additional left wing hydraulic power pack, the additional left wing hydraulic power pack configured to supply hydraulic fluid to the second left wing control element.

6. A control system according to claim 5, wherein the left wing hydraulic power pack is sized to meet a hydraulic fluid requirement of the first left wing control element.

7. A control system according to claim 5 or 6, wherein the left wing hydraulic power and the additional left wing hydraulic power pack are sized to together meet a hydraulic fluid requirement of the second left wing control element, wherein the second left wing control element has a greater hydraulic fluid requirement than the first left wing control element.

8. A control system according to any preceding claim and comprising a first left wing selector valve, the first left wing selector valve configured to control flow of hydraulic fluid from the left wing hydraulic power pack to the first left wing control element.

9. A control system according to any preceding claim and comprising a second left wing selector valve, the second left wing selector valve configured to control flow of hydraulic fluid from the left wing hydraulic power pack to the second left wing control element.

10. A control system according to claim 9 when dependent on claim 2, wherein the second left wing selector valve is configured to control flow of hydraulic fluid from the left wing hydraulic power pack to the second right wing control element.

11. A control system according to any preceding claim and further comprising:
a centralized system control element; and
a centralized hydraulic power pack configured to supply hydraulic fluid to the centralized system control element.

12. A control system according to any preceding claim, wherein the first left wing control element comprises at least one of a thrust reverser actuation system and a power door operating system.

13. A control system according to any preceding claim, wherein the second left wing control element comprises at least one of a folding wing tip, a fast-acting spoiler, and a slat and flap system.

14. A control system according to any preceding claim wherein the left wing hydraulic power pack is sized to meet a hydraulic fluid requirement of the second left wing control element.

15. An aircraft comprising the control system of any preceding claim and comprising a left wing and a right wing,
wherein the first left wing control element, the second left wing control element and the left wing hydraulic power pack are located in the left wing,
wherein the first right wing control element, the second right wing control element and the right wing hydraulic power pack are located in the right wing.
